# EUROPÄISCHE PATENTSCHRIFT

(11) **EP 0 465 791 B1**
(45) Veröffentlichungstag und Bekanntmachung des Hinweises auf die Patenterteilung: **13.03.1996**
(21) Anmeldenummer: 91107323.7
(22) Anmeldetag: 06.05.1991
(51) Int. Cl.: H02H 7/08, H02H 7/085

(54) **Ansteuerschaltung mit Blockierschutz-Einrichtung für einen kollektorlosen Gleichstrommotor**
Control circuit with antilock device for a DC-motor without collector
Circuit de commande avec dispositif d'antiblocage pour moteur à courant continu sans collecteur

(30) Priorität: 07.07.1990 DE 4021663
(43) Veröffentlichungstag der Anmeldung: 15.01.1992
(73) Patentinhaber: ebm Elektrobau Mulfingen GmbH & Co., D-74671 Mulfingen (DE)
(72) Erfinder: Reinhardt, Wilhelm, W-7187 Schrozberg-Gütbach (DE); Lipp, Helmut, Dipl.-Ing. (FH), W-7119 Hohebach (DE); Schultz, Karl-Heinz, Dipl.-Ing. (FH), W-7110 Öhringen-Cappel (DE)
(74) Vertreter: Patentanwälte Dr. Solf & Zapf

(56) Entgegenhaltungen:
- EP-A- 0 208 970
- DE-A- 3 203 829
- DE-A- 3 239 847
- US-A- 3 708 720

## Beschreibung

Die vorliegende Erfindung betrifft eine Ansteuerschaltung für einen kollektorlosen Gleichstrommotor, wobei jeder Statorwicklung des Motors mindestens ein Leistungstransistor vorgeschaltet ist, der zur Kommutierung des Motorstromes von einer mindestens einen Rotorstellungssensor, insbesondere Hallgenerator, aufweisenden Kommutierungsschaltung angesteuert wird, und wobei eine den Motorstrom bei Überlastung bzw. Blockierung unterbrechende Blockierschutz-Einrichtung vorgesehen ist.

Derartige Ansteuerschaltungen sind beispielsweise in der DE-OS 34 18 276, der DE-OS 34 05 942, der DE-OS 32 03 691 und der DE-OS 32 03 829 beschrieben. Alle diese Schaltungen überwachen die während des Motorlaufs in den Statorwicklungen induzierte Gegen-EMK, wobei in dem Fall, daß die Gegen-EMK zu Null wird bzw. einen bestimmten Mindestwert unterschreitet, was ein Zeichen für eine Blockierung oder Teil-Blockierung (Abbremsung) des Motors ist, der Motorstrom abgeschaltet wird. Hierdurch werden die Wicklungen und insbesondere die Leistungstransistoren vor Zerstörung geschützt. Dabei ist aber nachteiligerweise jeweils eine besondere Schaltungsmaßnahme für den Anlauf, d.h. eine sog. Anlaufüberbrückung, notwendig, die die Anlaufphase, während der die induzierte Gegen-EMK noch zu gering ist, überbrückt. Außerdem eignen sich die bekannten Schaltungen auch nur für Motoren mit geringer bis mittlerer Leistung.

In der EP-A-0 208 970 ist ein MOSFET mit Temperaturschutz offenbart. Dieses Bauteil stellt jedoch nur ein Einzelelement dar, welches in gattungsgemäßen Ansteuerschaltungen verwendet werden kann. Diese Druckschrift offenbart aber keine Maßnahmen zum Blockierschutz bzw. zur Anlaufsteuerung eines kollektorlosen Gleichstrommotors.

Des weiteren ist aus der US-A-3,708,720 eine Maßnahme zur Vermeidung der Zerstörung von Leistungshalbleitern einer Ansteuerschaltung für eine z. B. als Motor ausgebildete Last Z₂ bekannt, falls durch thermische Überlastung anläßlich eines blockierten Rotors ein zu hoher Motorstrom fließen sollte. Diese Maßnahme wird mit Hilfe eines den Motorstrom führenden Halbleiterelements verwirklicht, welches in Abhängigkeit von seiner Temperatur durchgeschaltet oder gesperrt wird. Hierbei ist jedoch von Nachteil, daß im Falle einer Anwendung dieser Maßnahme bei einer gattungsgemäßen Ansteuerschaltung für einen kollektorlosen Gleichstrommotor eine vollständige Abschaltung des Motors auch schon bei relativ kurzen Blockierungen erfolgt. In der Praxis treten aber oft Zustände auf, in denen ein Motor nur kurzzeitig abgebremst oder blockiert wird, so daß es dann möglichst noch nicht zu einem Abschalten kommen sollte.

Der Erfindung liegt die Aufgabe zugrunde, ausgehend von dem beschriebenen Stand der Technik eine Ansteuerschaltung zu schaffen, die sich bei vermindertem Schaltungs- und Bauteilaufwand auch für Motoren höherer Leistung eignet, wobei eine hohe Sicherheit gegen ungewolltes Abschalten im Falle von nur kurzen Blockierungen bzw. Abbremsungen erreicht werden soll.

Erfindungsgemäß wird dies dadurch erreicht, daß die Blokkierschutz-Einrichtung mindestens ein den Motorstrom führendes Halbleiter-Schaltelement aufweist, welches in Abhängigkeit von seiner Temperatur durchgeschaltet oder gesperrt wird, wobei zusätzlich eine den Motorstrom bei Erreichen eines bestimmten, höchstzulässigen Strom-Maximalwertes abschaltende und unterhalb des Maximalwertes einschaltende Strombegrenzungsschaltung vorgesehen ist, so daß der im Falle einer Blockierung aufgrund fehlender oder reduzierter induzierter Gegen-EMK erhöhte Motorstrom ständig getaktet wird, bis bei fortdauernder Blockierung durch den getakteten, erhöhten Motorstrom die Temperatur des Halbleiter-Schaltelementes der Blockierschutz-Einrichtung derart ansteigt, daß es sperrt und dadurch den Motorstrom gänzlich unterbricht. Dabei kann das Halbleiter-Schaltelement - zusätzlich zu den Kommutierungs-Leistungstransistoren - in Reihe zu den Statorwicklungen geschaltet sein. Dies bedeutet, daß nur ein einzelnes Halbleiter-Schaltelement erforderlich ist. Alternativ hierzu kann jedoch auch jeder Statorwicklung ein Halbleiter-Schaltelement in Reihe vorgeschaltet sein, wobei dann vorzugsweise jedes Halbleiter-Schaltelement von einem der Kommutierungs-Leistungstransistoren gebildet ist, d.h. Kommutierungs-Leistungstransistoren bilden die erfindungsgemäßen Halbleiter-Schaltelemente, die neben ihrer normalen Kommutierung auch in Abhängigkeit von ihrer Temperatur und/oder dem Motorstrom geschaltet werden. Für die Schaltung in Abhängigkeit des Motorstroms ist die zusätzliche Strombegrenzungsschaltung in die erfindungsgemäße Ansteuerschaltung integriert. Diese Strombegrenzungsschaltung überwacht den jeweiligen Motorstrom und schaltet diesen bei Erreichen eines höchstzulässigen Strom-Maximalwertes ab. Diese Strombegrenzungsschaltung ist insbesondere in der Anlaufphase oder bei Blockierung des Motors wirksam, da dann ein erhöhter Motorstrom dadurch auftritt, daß dieser noch nicht oder nicht mehr durch die induzierte Gegen-EMK begrenzt wird. Dadurch, daß der Motorstrom bei Überschreitung des höchstzulässigen Maximalwertes abgeschaltet und bei Unterschreitung dieses Maximalwertes wieder eingeschaltet wird, ergibt sich eine ständige Taktung des Motorstromes. Während der Anlaufphase des Motors sinkt der Motorstrom mit zunehmender Drehzahl aufgrund der sich aufbauenden Gegen-EMK unter den Maximalwert, so daß der Anteil der Taktung, der in der Anlaufphase infolge des erhöhten Anlaufstromes auftritt, beendet wird. Bei einer Blockierung des Motors würde demgegenüber der Motorstrom stets oberhalb des Maximalwertes bleiben, so daß die beschriebene Taktung solange fortdauert, bis durch den getakteten, erhöhten Motorstrom die Verlustleistung in dem erfindungsgemäßen Halbleiter-Schaltelement und damit auch dessen Temperatur so weit zunimmt, daß dieses sperrt und dadurch den Motorstrom unterbricht.

Dabei liegt der Erfindung die Überlegung zugrunde, daß ein bestimmter Motorstrom eine bestimmte Verlustleistung und damit auch eine bestimmte Temperatur des Halbleiter-Schaltelementes zur Folge hat, so daß der maximal zulässigen Verlustleistung eine bestimmte Temperatur "zugeordnet" werden kann. Bei Erreichen dieser Temperatur wird das Halbleiter-Schaltelement jeweils abgeschaltet. Ein Wiedereinschalten des Motors erfolgt entweder durch kurzes Abschalten der Speisespannung oder automatisch nach Abkühlung, was durch eine spezielle Schaltungsmaßnahme erreicht wird, die im folgenden noch beschrieben werden wird.

Die vorliegende Erfindung stellt demnach eine Abkehr von solchen bekannten Schaltungen dar, bei denen ein Blockierschutz anhand der induzierten Gegen-EMK vorgesehen war. Vorteilhafterweise erübrigen sich hierdurch die besonderen Schaltungsmaßnahmen für die Anlaufphase. Denn erfindungsgemäß ist ein Anlauf bei geeigneter Auslegung des Halbleiter-Schaltelementes bzw. der Halbleiter-Schaltelemente auch ohne zusätzliche Maßnahmen möglich.

Vorzugsweise ist das bzw. jedes Halbleiter-Schaltelement in gut wärmeleitendem Kontakt mit einem Temperatursensor verbunden, der im Falle eines Temperaturanstieges bei Erreichen einer maximal zulässigen Chip-Temperatur des Halbleiter-Schaltelementes dessen Sperren bewirkt. Vorzugsweise ist das Halbleiter-Schaltelement als MOSFET ausgebildet,und der Temperatursensor ist als Halbleiterschalter, insbesondere als Thyristor, zwischen Gate und Source des MOSFET geschaltet. Bei Erreichen der maximal zulässigen Chip-Temperatur des MOSFET schaltet der Temperatursensor durch und schließt dadurch die Gate-Source-Strecke kurz. Dies hat zur Folge, daß die Eingangskapazität des FET schlagartig entladen wird und er dadurch selbsttätig abschaltet.Es ist hierbei besonders vorteilhaft, das Halbleiter-Schaltelement und den Temperatursensor als integriertes Bauelement, insbesondere als TEMPFET, auszubilden. Bei diesem an sich bekannten Bauteil liegen ein Transistor-Chip und ein Temperatursensor-Chip nur über eine dünne Klebeschicht voneinander getrennt aufeinander, so daß ein außerordentlich guter thermischer Kontakt der beiden Bauteile gewährleistet ist. Dadurch werden auch schnelle Temperaturerhöhungen sicher erkannt.

Vorteilhafte Weiterbildungen der Erfindung sind in den Unteransprüchen sowie der nachfolgenden Beschreibung enthalten.

Anhand von zwei in den Zeichnungen dargestellten Ausführungsbeispielen soll die Erfindung im folgenden näher erläutert werden.

Dabei zeigen:
- Fig. 1: eine erste Ausführungsform einer erfindungsgemäßen Ansteuerschaltung für einen zweisträngigen, zweipulsigen kollektorlosen Gleichstrommotor und
- Fig. 2: eine zweite Ausführungsform der Ansteuerschaltung für einen dreisträngigen, sechspulsigen kollektorlosen Gleichstrommotor.

In den beiden Zeichnungsfiguren sind gleiche bzw. gleichwirkende Teile und Komponenten stets mit den gleichen Bezugszeichen bezeichnet.

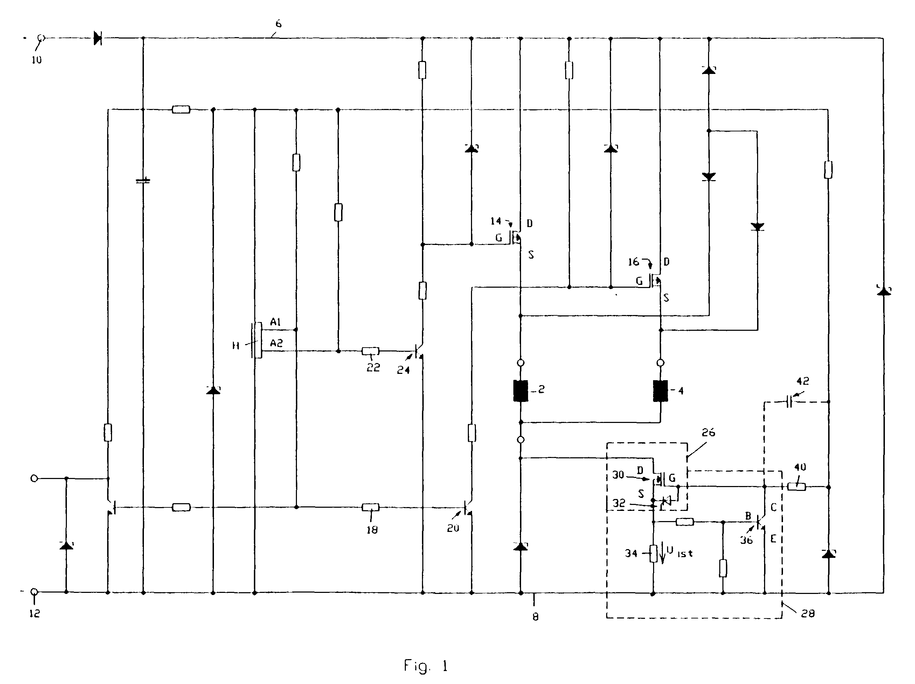

In Fig. 1 ist eine erfindungsgemäße Ansteuerschaltung für einen kollektorlosen Gleichstrommotor mit zwei Statorwicklungen 2 und 4, d.h. für einen zweisträngigen, zweipulsigen Motor, dargestellt. Die beiden Statorwicklungen 2, 4 sind parallel zueinander zwischen eine Plusleitung 6 und eine Minusleitung 8 geschaltet. Diese beiden Leitungen 6 und 8 sind über Klemmen 10 und 12 an eine Speisespannungsquelle anschließbar. In Reihe zu jeder Statorwicklung 2, 4 liegt jeweils ein Leistungstransistor 14, 16, wobei diese Leistungstransistoren 14 und 16 im dargestellten Beispiel als FET (MOSFET) ausgebildet sind, deren Drain-Source-Strecke D-S jeweils in Reihe zu den Statorwicklungen 2 bzw. 4 liegt, und deren Gate G von einer Kommutierungsschaltung angesteuert wird. Diese Kommutierungsschaltung besteht im dargestellten Ausführungsbeispiel im wesentlichen aus einem Hallgenerator H mit zwei Ausgängen A1 und A2. Der erste Ausgang A1 ist über einen Basiswiderstand 18 mit der Basis eines Verstärkertransistors 20 verbunden, dessen Kollektor-Emitter-Strecke das Gate G des Leistungstransistors 16 ansteuert. Analog hierzu ist der zweite Ausgang A2 des Hallgenerators H über einen Basiswiderstand 22 mit der Basis eines zweiten Verstärkertransistors 24 verbunden, dessen Kollektor-Emitter-Strecke das Gate G des Leistungstransistors 14 ansteuert.

Die erfindungsgemäße Ansteuerschaltung enthält weiterhin eine Blockierschutz-Einrichtung 26 sowie vorzugsweise auch eine Strombegrenzungsschaltung 28. Diese Komponenten sind in Fig. 1 jeweils durch gestrichelte Linien hervorgehoben und sollen im folgenden näher erläutert werden.

Die Blockierschutz-Einrichtung 26 weist in der Ausführung nach Fig. 1 erfindungsgemäß ein den Motorstrom führendes Halbleiter-Schaltelement 30 auf, welches hierzu in Reihe zu den Statorwicklungen 2, 4 geschaltet ist, und zwar beispielsweise - wie dargestellt - zwischen die Statorwicklungen 2, 4 und die Minusleitung 8. Vorzugsweise besteht das Halbleiter-Schaltelement aus einem Feldeffekttransistor FET, und zwar insbesondere einem MOSFET, dessen Drain-Source-Strecke D-S in Reihe zu den Statorwicklungen 2, 4 geschaltet ist und hierdurch den Motorstrom führt. Das Halbleiter-Schaltelement 30 ist erfindungsgemäß in gut wärmeleitendem Kontakt mit einem Temperatursensor 32 verbunden, der als Halbleiterschalter, insbesondere als Thyristor, ausgebildet und zwischen Gate G und Source S des das Halbleiter-Schaltelement 30 bildenden FET geschaltet ist. Das Halbleiter-Schaltelement 30 und der Temperatursensor 32 können mit Vorteil als integriertes Bauelement, d.h. als sogenannter TEMPFET ausgebildet sein.

Die Strombegrenzungsschaltung 28 besitzt einen Strommeßwiderstand 34, der ebenfalls den Motorstrom führt und hierzu in Reihe zu den Statorwicklungen 2, 4 und damit auch in Reihe zu dem Halbleiter-Schaltelement 30 geschaltet ist. Parallel zu dem Strommeßwiderstand 34 liegt die Basis-Emitter-Strecke B-E eines Steuertransistors 36, der über seine Kollektor-Emitter-Strecke C-E das Halbleiter-Schaltelement 30, d.h. das Gate G des FET, ansteuert.

Die in Fig. 1 dargestellte, erste Ausführungsform der erfindungsgemäßen Ansteuerschaltung arbeitet nun wie folgt.

### 1. Normalbetrieb

Der Hallgenerator H gibt während des Rotordrehung zwei zueinander komplementäre Ausgangssignale ab, die sich jeweils über eine Impulsdauer von ca. 180° elektrisch erstrecken. Dies bedeutet, daß den Statorwicklungen 2, 4 pro Rotorumdrehung von 360° elektrisch zwei Stromimpulse zugeführt werden. Die Ausgangssignale des Hallgenerators H werden über die Basiswiderstände 18, 22 den Vorverstärkertransistoren 20 und 24 jeweils zugeführt. Je nach Stellung des Rotors liegt nun entweder am Ausgang A1 bzw. am Ausgang A2 des Hallgenerators H eine positive Ausgangsspannung an, während an dem jeweils anderen Ausgang das negative Potential der Minusleitung 8 anliegt. Die Ausgangssignale des Hallgenerators H besitzen relativ steil ansteigende und steil abfallende Flanken, so daß nahezu rechteckförmige Ausgangssignale vorliegen. Liegt nun an dem Ausgang A1 ein positives Ausgangssignal an, so wird zunächst der Verstärkertransistor 20 durchgeschaltet, so daß über dessen Kollektor-Emitter-Strecke der Leistungstransistor 16 durchschaltet. Hierdurch kann ein Motorstrom ausgehend von der Plusleitung 6 über die Emitter-Kollektor-Strecke bzw. die Drain-Source-Strecke des Leistungstransistors 16, über die Statorwicklung 4, über das zunächst als durchgeschaltet zu betrachtende Halbleiter-Schaltelement 30 sowie über den Strommeßwiderstand 34 zu der Minusleitung 8 fließen. Der andere Ausgang A2 des Hallgenerators H führt zu diesem Zeitpunkt das negative Potential der Minusleitung 8. Dies hat zur Folge, das der zweite Verstärkertransistor 24 gesperrt ist, so daß auch der Leistungstransistor 14 gesperrt ist. Nach einer Rotorumdrehung von 180° elektrisch wechseln bei dem zweipulsigen, zweisträngigen Motor die Ausgangssignale des Hallgenerators H, so daß nunmehr der Ausgang A1 negatives und der Ausgang A2 positives Potential führen. Dadurch werden die Transistoren 20 und 16 gesperrt und dafür der Verstärkertransistor 24 und der Leistungstransistor 14 durchgeschaltet, so daß dann ein entsprechender Stromfluß über die Statorwicklung 2 erfolgt. Diese Kommutierung von einer Wicklung auf die jeweils andere erfolgt jeweils nach einer Rotorumdrehung von 180° elektrisch. Dies ist der "normale", d.h. ungestörte Betrieb des Motors.

### 2. Anlaufphase

In der Anlaufphase des Motors ist die vorzugsweise vorgesehene Strombegrenzungsschaltung 28 wirksam. Diese ist deshalb von Vorteil, da für die Anlaufphase in der Regel die Forderung gestellt wird, daß ein vorgegebener Anlaufstrom nicht überschritten werden darf, um beispielsweise die verfügbare Spannungsquelle nicht zu überlasten. Durch den jeweils fließenden Motorstrom entsteht an dem Strommeßwiderstand 34 ein bestimmter Spannungsabfall, der in dem oben beschriebenen Normalbetrieb allerdings nicht ausreicht, um den Steuertransistor 36 durchzuschalten. Übersteigt nun aber der Motorstrom einen gewissen vorgegebenen Maximalwert, so kann bei zunehmendem Spannungsabfall an dem Strommeßwiderstand 34, d.h. bei einer bestimmten Referenzspannung U_{ref}, der Transistor 36 durchsteuern, wodurch das negative Potential der Minusleitung 8 an das Gate G des Halbleiter-Schaltelementes 30 angelegt wird. Hierdurch erfolgt eine rasche Entladung des Gates G, was zu einer Sperrung des Halbleiter-Schaltelementes 30 und damit zu einer Unterbrechung des Motorstromes führt. Durch diese Unterbrechung des Motorstromes sinkt der Spannungsabfall am Strommeßwiderstand 34, so daß die Einschaltschwelle des Steuertransistors 36 wieder unterschritten wird und dieser wieder in den sperrenden Zustand übergeht. Dadurch entfällt das negative Potential am Gate G des Halbleiter-Schaltelementes 30, wodurch dessen Ansteuerung wieder erfolgen kann. Hierdurch kann der Motorstrom wieder fließen. Aufgrund des höheren Anlaufstromes infolge der in der Anlaufphase noch geringen Gegen-EMK wird der Motorstrom am Strommeßwiderstand 34 erneut einen derartigen Spannungsabfall hervorrufen, daß eine weitere Sperrung des Halbleiter-Schaltelementes 30 in der beschriebenen Weise bewirkt wird. Hierdurch kommt es folglich in der Anlaufphase zu einem ständigen Takten des Motorstroms über das Halbleiter-Schaltelement 30. Mit zunehmender Drehgeschwindigkeit des Motors steigt dann die Gegen-EMK an, was zur Folge hat, daß der Motorstrom abnimmt, da ja die Gegen-EMK dem Motorstrom entgegenwirkt, wodurch der Spannungsabfall an dem Strommeßwiderstand 34 die Einschaltschwelle des Steuertransistors 36 nicht mehr überschreitet und dieser deshalb gesperrt bleibt. Ab diesem Zeitpunkt wird auch das Halbleiter-Schaltelement 30 dann nicht mehr getaktet, und die Anlaufphase ist damit abgeschlossen.

### 3. Blockierung

Ein kritischer Fall, der zu einer Zerstörung des Motors bzw. einzelner Komponenten des Motors infolge Übertemperatur führen könnte, liegt dann vor, wenn der Rotor des Motors blockiert wird. Aufgrund der dann im Stillstand fehlenden Gegen-EMK wird der Motorstrom nur noch durch den ohmschen Anteil der Motorwicklung 2 bzw. 4 begrenzt und nimmt deshalb derartig hohe Werte an, daß ein Ausfall des Motors eintreten könnte. In diesem Fall erfolgt in der bevorzugten Ausführungsform der Erfindung, d.h. mit der integrierten Strombegrenzungsschaltung 28, in der oben bereits beschriebenen Weise zunächst eine Taktung des Halbleiter-Schaltelementes 30. Da diese Taktung jedoch aufgrund der bei Blockierung fehlenden Gegen-EMK nicht beendet wird, kommt es nach einer bestimmten Zeit zu einer erhöhten Verlustleistung innerhalb des HalbleiterSchaltelementes 30, was zu einer Temperaturerhöhung innerhalb dieses Schaltelementes 30 führt. Wird die maximal zulässige Chip-Temperatur, die bei ca. 150° C liegt, überschritten, so schließt der Temperatursensor 32 die Gate-Source-Strecke G-S kurz. Dadurch erfolgt eine schlagartige Entladung der Eingangskapazität, was zur Abschaltung dieses Halbleiter-Schaltelementes 30 (TEMPFET) führt. Auf diese Weise wird der Motorstrom abgeschaltet.

Wenn dann nachfolgend die Blockierung beseitigt und die Chip-Temperatur abgesunken ist, kann entweder eine automatische Wiedereinschaltung des Halbleiter-Schaltelementes 30 erfolgen, wozu dem Gate G eine Parallelschaltung aus einem Widerstand 40 und einem Kondensator 42 vorgeschaltet ist. Alternativ hierzu kann dem Gate G jedoch auch nur der Widerstand 40 vorgeschaltet sein (weshalb der Kondensator 42 mit gestrichelten Anschlußleitungen eingezeichnet ist), wodurch dann eine erneute Einschaltung des Motorstroms erst nach kurzzeitigem Abschalten der Speisespannung möglich ist. Dies bedeutet, daß dann der Temperatursensor 32 eine echte Thyristor-Funktion besitzt. Der Anlauf erfolgt dann in der oben bereits beschriebenen Weise.

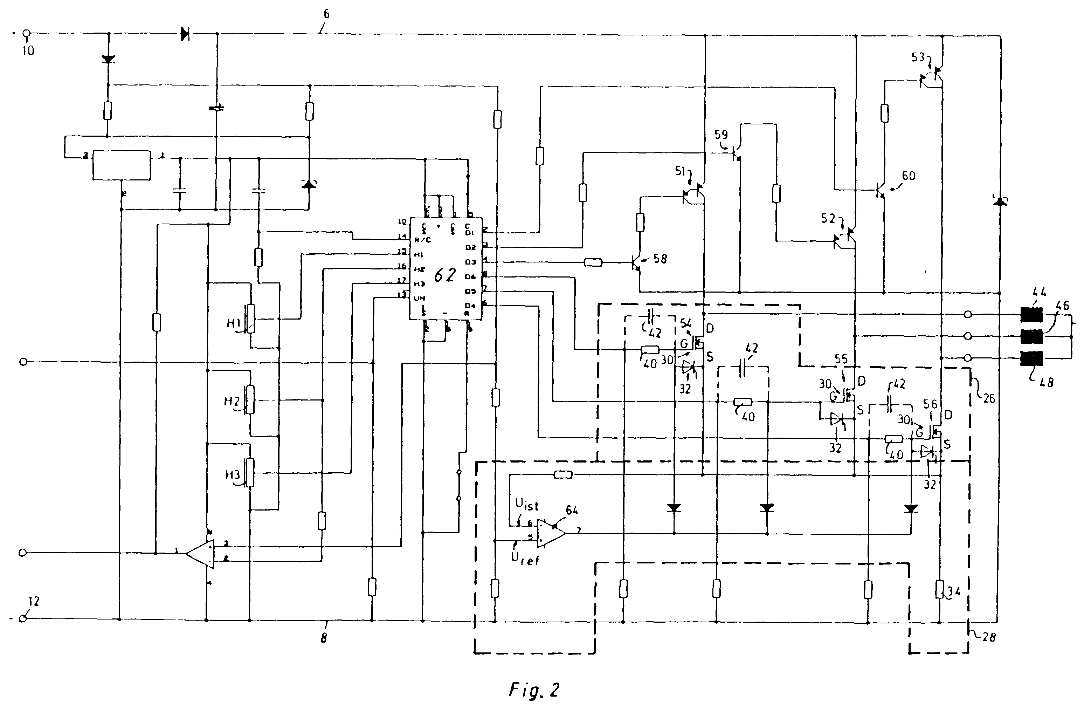

In Fig. 2 ist eine zweite Ausführungsform der erfindungsgemäßen Ansteuerschaltung dargestellt, und zwar ist diese Ansteuerschaltung für einen dreisträngigen, sechspulsigen kollektorlosen Gleichstrommotor geeignet. Dieser dreisträngige Motor besitzt drei Statorwicklungen 44, 46 und 48, die in Sternschaltung in eine Drehstrom-Brückenschaltung aus sechs Kommutierungs-Leistungstransistoren 51, 52, 53, 54, 55 und 56 geschaltet sind. Die Leistungstransistoren 51, 52 und 53 der "oberen" Brückenzweige sind im dargestellten Ausführungsbeispiel als Darlington-Transistoren ausgebildet. Ferner ist diesen Transistoren jeweils ein Verstärker-Transistor 58, 59, 60 vorgeschaltet. Die Reihenfolge der Ansteuerung der Leistungstransistoren wird durch die Ausgangssignale von beispielsweise drei jeweils um 60° elektrisch (30° mech) gegeneinander versetzt digital schaltenden Hallgeneratoren H1, H2, H3 festgelegt. Die Ausgangssignale der Hallgeneratoren werden einer Auswerteschaltung 62 zugeführt, die die Leistungstransistoren jeweils paarweise ansteuert. Die Leistungstransistoren 51, 52, 53 der oberen Brückenzweige werden über die Verstärkertransistoren 58, 59 und 60 angesteuert, während die Leistungstransistoren 54, 55 und 56 der unteren Brückenzweige unmittelbar angesteuert werden. Die Auswerteschaltung 62 legt in Abhängigkeit von der Rotorstellung die Ansteuerzeitpunkte der Leistungstransistoren fest. Dabei erfolgt die Bestromung der Statorwicklungen 44, 46, 48 in an sich bekannter Weise derart, daß zu einem bestimmten Kommutierungszeitpunkt jeweils zwei in Reihe geschaltete Statorwicklungen gleichzeitig eingeschaltet werden. Da dies kein wesentlicher Bestandteil der vorliegenden Erfindung ist, kann sich eine genauere Beschreibung erübrigen.

Die Leistungstransistoren 54, 55 und 56 der unteren Brückenzweige bilden nun erfindungsgemäß jeweils ein Halbleiter-Schaltelement 30, wie dies anhand der Fig. 1 bereits beschrieben wurde. Demzufolge besitzt auch hier jedes Halbleiter-Schaltelement 30 den bereits beschriebenen Temperatursensor 32. Im übrigen kann auf die diesbezüglichen Ausführungen zu Fig. 1 verwiesen werden.

Des weiteren ist in der Ausführung nach Fig. 2 ebenfalls die Strombegrenzungsschaltung 28 enthalten, die auch hier den den Motorstrom führenden, in Reihe zu den Statorwicklungen geschalteten Strommeßwiderstand 34 aufweist. Allerdings wird hier im Gegensatz zu der Ausführung in Fig. 1 der Spannungsabfall des Strommeßwiderstandes 34 einem ersten Eingang eines Komparators 64 als Ist-Spannung Uᵢₛₜ zugeführt. Einem zweiten Eingang des Komparators 64 wird vorzugsweise über einen aus Widerständen bestehenden Spannungsteiler eine Referenzspannung U_{ref} zugeführt. Ein Ausgang des Komparators 64 ist mit den Gate G aller drei Halbleiter-Schaltelemente 30, d.h. der Leistungstransistoren der unteren Brückenzweige, verbunden, und zwar über jeweils eine Vorschaltdiode.

Im folgenden soll nun noch kurz die Funktion der in Fig. 2 dargestellten Ansteuerschaltung erläutert werden.

### 1. Anlauf

Tritt während der Anlaufphase ein zu großer Anlaufstrom auf, so übersteigt der Spannungsabfall Uᵢₛₜ des Strommeßwiderstandes 34 die Referenzspannung U_{ref}, so daß der Komparator 64 durchschaltet, d.h. negatives Potential an die Gate G der Halbleiter-Schaltelemente 30 legt. Dies hat zur Folge, daß die Eingangskapazität des gerade - in Abhängigkeit von der Rotorstellung - leitenden Leistungstransistors bzw. Halbleiterschaltelementes 30 schlagartig entladen wird und dieser Transistor sofort sperrt. Durch die Unterbrechung des Motorstromes verringert sich der Spannungsabfall des Strommeßwiderstandes 34 und unterschreitet dadurch wieder die Referenzspannung, so daß der Komparator seinen Ausgang wieder umschalten kann. Dies führt dazu, daß die Gate G der Halbleiter-Schaltelemente 30 wieder zur Ansteuerung durch die Auswerteschaltung 62 "freigegeben" sind. Es erfolgt nun in Verbindung mit dem gerade leitenden Leistungstransistor 51, 52 bzw. 53 der oberen Brückenzweige die Bestromung der entsprechenden, durch die Auswerteschaltung ausgewählten Statorwicklungen. Es erfolgt somit analog zur Ausführung nach Fig. 1 eine Taktung des Motorstromes, bis die Gegen-EMK den Motorstrom soweit begrenzt, daß der Maximalwert nicht mehr überschritten wird.

### 2. Blockierung

Auch bei Blockierung tritt wiederum die bereits beschriebene Taktung des Motorstromes auf, in diesem Falle allerdings nur durch Taktung des einen, in dem jeweiligen Zeitpunkt entsprechend der Stillstandsstellung des Rotors ausgewählten Halbleiter-Schaltelementes 30. Die fortgesetzte Taktung hat in der oben bereits beschriebenen Weise zur Folge, daß bei erhöhter Chip-Temperatur eine Durchschaltung der Gate-Source Strecke erfolgt, was mit einer Entladung der Eingangskapazität verbunden ist und zu einer sofortigen Sperrung des betreffenden Halbleiter-Schaltelementes 30 führt. Der entsprechende Wicklungsstrom wird nun unterbrochen, und das Schaltelement 30 kann sich wieder abkühlen. Nach Unterschreiten der Abschalttemperatur kann eine selbsttätige Wiedereinschaltung oder aber eine Wiedereinschaltung erst nach Abschaltung der Speisespannung durchgeführt werden. Eine selbsttätige Wiedereinschaltung erfolgt dann, wenn in den Ansteuerkreis der Halbleiter-Schaltelemente 30 jeweils eine geeignet dimensionierte Parallelschaltung aus dem Widerstand 40 und dem Kondensator 42 geschaltet ist. Ist eine automatische Wiedereinschaltung nicht erwünscht, so kann sich jeweils der Kondensator 42 erübrigen, weshalb er auch in Fig. 2 jeweils mit gestrichelten Anschlußleitungen dargestellt ist.

Es ist noch darauf hinzuweisen, daß die konkreten, schaltungstechnischen Ausführungen der Figuren 1 und 2 durchaus miteinander im Rahmen der Ansprüche kombiniert werden können. Beispielsweise ist es in der Ausführung nach Fig. 1 ebenfalls möglich, anstelle des einzigen Halbleiter-Schaltelementes 30 die beiden Leistungstransistoren 14 und 16 jeweils als erfindungsgemäßen Halbleiter-Schaltelement 30 mit Temperatursensor 32 auszubilden. Des weiteren ist es hier möglich, bei der Strombegrenzungsschaltung 28 anstelle des Steuertransistors 36 einen Komparator analog zu Fig. 2 zu verwenden. Gleichermaßen ist es in der Ausführung nach Fig. 2 möglich, analog zu Fig. 1 ein einziges Halbleiter-Schaltelement 30 mit Temperatursensor 32 in Reihe mit den Statorwicklungen 44 bis 48 zu schalten. Insofern ist die Erfindung in keiner Weise auf die dargestellten und beschriebenen Ausführungsbeispiele beschränkt, sondern umfaßt auch alle im Sinne der Ansprüche gleichwirkenden Ausführungsformen.

## Patentansprüche

1. Ansteuerschaltung für einen kollektorlosen Gleichstrommotor, wobei jeder Statorwicklung (2.4; 44,46,48) des Motors mindestens ein Leistungstransistor vorgeschaltet ist, der zur Kommutierung des Motorstromes von einer mindestens einen Rotorstellungssensor, insbesondere Hallgenerator (H; H1,H2,H3), aufweisenden Kommutierungsschaltung angesteuert wird, und wobei eine den Motorstrom bei Überlastung bzw. Blockierung unterbrechende Blockierschutz-Einrichtung (26) vorgesehen ist, **dadurch gekennzeichnet,** daß die Blockierschutz-Einrichtung (26) mindestens ein den Motorstrom führendes Halbleiter-Schaltelement (30) aufweist, welches in Abhängigkeit von seiner Temperatur durchgeschaltet oder gesperrt wird, wobei zusätzlich eine den Motorstrom bei Erreichen eines bestimmten, höchstzulässigen Strom-Maximalwertes abschaltende und unterhalb des Maximalwertes einschaltende Strombegrenzungsschaltung (28) vorgesehen ist, so daß der im Falle einer Blockierung aufgrund fehlender oder reduzierter induzierter Gegen-EMK erhöhte Motorstrom ständig getaktet wird, bis bei fortdauernder Blockierung durch den getakteten, erhöhten Motorstrom die Temperatur des Halbleiter-Schaltelementes (30) der Blockierschutz-Einrichtung (26) derart ansteigt, daß es sperrt und dadurch den Motorstrom gänzlich unterbricht.

2. Ansteuerschaltung nach Anspruch 1,
**dadurch gekennzeichnet** , daß das Halbleiter-Schaltelement (30) der Blockierschutz-Einrichtung (26) zusätzlich zu den Kommutierungs-Leistungstransistoren (14, 16; 51 bis 56) in Reihe zu den Statorwicklungen (2, 4; 44 bis 48) geschaltet ist.

3. Ansteuerschaltung nach Anspruch 1,
**dadurch gekennzeichnet** , daß jeder Statorwicklung (2, 4; 44 bis 48) ein Halbleiter-Schaltelement (30) der Blockierschutz-Einrichtung (26) in Reihe vorgeschaltet ist, wobei vorzugsweise jedes Halbleiter-Schaltelement (30) von einem der Kommutierungs-Leistungstransistoren (14, 16; 51 bis 56) gebildet ist.

4. Ansteuerschaltung nach einem oder mehreren der Ansprüche 1 bis 3,
**dadurch gekennzeichnet**, daß das/jedes Halbleiter-Schaltelement (30) mit gut wärmeleitendem Kontakt mit einem Temperatursensor (32) verbunden ist, der im Falle eines Temperaturanstieges bei Erreichen einer maximal zulässigen Chip-Temperatur des Halbleiter-Schaltelementes (30) dessen Sperren bewirkt.

5. Ansteuerschaltung nach Anspruch 4,
**dadurch gekennzeichnet,** daß das/jedes Halbleiter-Schaltelement (30) als MOSFET und der Temperatursensor (32) als zwischen Gate (G) und Source (S) des MOSFET geschalteter Halbleiterschalter, insbesondere Thyristor, ausgebildet sind.

6. Ansteuerschaltung nach Anspruch 4 oder 5,
**dadurch gekennzeichnet,** daß das/jedes Halbleiter-Schaltelement (30) und der Temperatursensor (32) in ein Bauelement integriert, insbesondere als TEMPFET ausgebildet sind.

7. Ansteuerschaltung nach einem oder mehreren der Ansprüche 1 bis 6,
**dadurch gekennzeichnet,** daß das/jedes temperaturbedingt gesperrte Halbleiter-Schaltelement (30) erst nach einem kurzzeitigen Abschalten und Wiedereinschalten der Versorgungsspannung wieder durchschaltet.

8. Ansteuerschaltung nach einem oder mehreren der Ansprüche 1 bis 6,
**dadurch gekennzeichnet,** daß das/jedes temperaturbedingt gesperrte Halbleiter-Schaltelement (30) nach Abkühlung selbsttätig wieder durchschaltet, wozu insbesondere dem Gate (G) des MOSFET bzw. des TEMPFET eine Parallelschaltung aus einem Widerstand (40) und einem Kondensator (42) vorgeschaltet ist.

9. Ansteuerschaltung nach einem oder mehreren der Ansprüche 1 bis 8,
**dadurch gekennzeichnet,** daß die Strombegrenzungsschaltung (28) einen in Reihe mit den Statorwicklungen (2, 4; 44 bis 48) angeordneten, den Motorstrom führenden Strommeßwiderstand (34) aufweist, dessen Spannungsabfall (Uᵢₛₜ) einer Ansteuerstufe zugeführt wird, wobei die Ansteuerstufe den Motorstrom abschaltet, wenn der Spannungsabfall (Uᵢₛₜ) ≥ einer bestimmten, den Strom-Maximalwert repräsentierenden Referenzspannung (U_{ref}) wird.

10. Ansteuerschaltung nach Anspruch 9,
**dadurch gekennzeichnet,** daß die Ansteuerstufe einen Steuertransistor (36) aufweist, dessen Basis-Emitterstrecke von dem Spannungsabfall (Uᵢₛₜ) des Strommeßwiderstandes (34) angesteuert wird, und dessen Kollektor-Emitterstrecke vorzugsweise das/jedes Halbleiter-Schaltelement (30) der Blockierschutz-Einrichtung (26) ansteuert.

11. Ansteuerschaltung nach Anspruch 9,
**dadurch gekennzeichnet,** daß die Ansteuerstufe einen Komparator (64) aufweist, wobei an einem ersten Eingang des Komparators (64) der Spannungsabfall (Uᵢₛₜ) des Strommeßwiderstandes (34) und an einem zweiten Eingang die Referenzspannung (U_{ref}) anliegen, und wobei ein Ausgang des Komparators (64) vorzugsweise das/jedes Halbleiter-Schaltelement (30) der Blockierschutz-Einrichtung (26) ansteuert.

## Claims

1. Control circuit for a brushless DC motor, in which circuit each stator winding (2.4; 44, 46, 48) of the motor has at least one power transistor which is connected upstream and which is controlled, for the purpose of commutating the motor current, by a commutation circuit comprising at least one rotor position sensor, in particular Hall generator (H; H1, H2, H3), and in which circuit an antilock device (26) is provided which interrupts the motor current in the event of overloading or locking, characterized in that the antilock device (26) comprises at least one semiconductor switching element (30) which carries the motor current and which is switched on or turned off as a function of its temperature, a current limiting circuit (28) also being provided which turns off the motor current on reaching a certain highest permissible current maximum value and switches it on below the maximum value, so that the motor current, which is increased in the event of locking because of absent or reduced induced counter EMF, is continuously switched until, in the event of continued locking, the temperature of the semiconductor switching element (30) of the antilock device (26) rises as a result of the switched, increased motor current to such an extent that it turns off and consequently completely interrupts the motor current.

2. Control circuit according to Claim 1, characterized in that, in addition to the commutation power transistors (14, 16; 51 to 56), the semiconductor switching element (30) of the antilock device (26) is connected in series with the stator windings (2, 4; 44 to 48).

3. Control circuit according to Claim 1, characterized in that a semiconductor switching element (30) of the antilock device (26) is connected in series upstream of each stator winding (2, 4; 44 to 48), each semiconductor switching element (30) preferably being formed by one of the commutation power transistors (14, 16; 51 to 56).

4. Control circuit according to one or more of Claims 1 to 3, characterized in that the/each semiconductor switching element (30) is connected by a contact with good thermal conduction to a temperature sensor (32) which, in the event of a temperature rise, effects a turning-off of the semiconductor switching element (30) on reaching a maximum permissible chip temperature of said semiconductor switching element (30).

5. Control circuit according to Claim 4, characterized in that the/each semiconductor switching element (30) is formed as MOSFET and the temperature sensor (32) is formed as semiconductor switch, in particular thyristor, connected between gate (G) and source (S) of the MOSFET.

6. Control circuit according to Claim 4 or 5, characterized in that the/each semiconductor switching element (30) and the temperature sensor (32) are integrated in one component, in particular formed as TEMPFET.

7. Control circuit according to one or more of Claims 1 to 6, characterized in that the/each semiconductor switching element (30) turned off as a function of temperature switches on again only after the supply voltage has been briefly turned off and switched on again.

8. Control circuit according to one or more of Claims 1 to 6, characterized in that the/each semiconductor switching element (30) turned off as a function of temperature automatically switches on again after cooling, for which purpose a parallel circuit comprising a resistor (40) and a capacitor (42) is connected upstream, in particular, of the gate (G) of the MOSFET or of the TEMPFET.

9. Control circuit according to one or more of Claims 1 to 8, characterized in that the current limiting circuit (28) comprises a current measuring resistor (34) disposed in series with the stator windings (2, 4; 44 to 48) and carrying the motor current and whose voltage drop (Uᵢₛₜ) is fed to a control stage, the control stage turning off the motor current if the voltage drop (Uᵢₛₜ) ≥ a certain reference voltage (U_{ref}) which represents the current maximum value.

10. Control circuit according to Claim 9, characterized in that the control stage comprises a controlling transistor (36) whose base-emitter section is controlled by the voltage drop (Uᵢₛₜ) of the current measuring resistor (34) and whose collector-emitter section preferably controls the/each semiconductor switching element (30) of the antilock device (26).

11. Control circuit according to Claim 9, characterized in that the control stage comprises a comparator (64), the voltage drop (Uᵢₛₜ) of the current measuring resistor (34) being applied to a first input of the comparator (64) and the reference voltage (U_{ref}) being applied to a second input, and one output of the comparator (64) preferably controlling the/each semiconductor switching element (30) of the antilock device (26).

## Revendications

1. Circuit de commande pour un moteur à courant continu sans collecteur, dans lequel au moins un transistor de puissance est monté en série avant chaque bobinage de stator (2.4 ; 44, 46, 48) du moteur, ledit au moins un transistor étant commandé pour la commutation du courant du moteur par un circuit de commutation présentant au moins un capteur de position de rotor, en particulier un générateur Hall (H ; H1, H2, H3), et dans lequel un dispositif anti-blocage (26) est prévu qui coupe le courant du moteur en cas de surcharge ou de blocage, caractérisé en ce que le dispositif anti-blocage (26) présente au moins un élément de circuit semi-conducteur (30) conduisant le courant du moteur, qui, en fonction de sa température, est commuté ou coupé, dans lequel en outre un circuit de limitation de courant (28) est prévu, qui coupe le courant du moteur lorsqu'il atteint une valeur maximale admissible de courant et qui alimente le courant en dessous de la valeur maximale, de telle sorte qu'en cas d'un blocage en raison d'une force contre-électromotrice induite nulle ou réduite, un courant de moteur accru est continuellement généré jusqu'à ce que, en cas de blocage persistant par le courant de moteur accru généré, la température de l'élément de circuit semi-conducteur (30) du dispositif anti-blocage (26) augmente de telle sorte qu'il bloque et de ce fait coupe totalement le courant du moteur.

2. Circuit de commande selon la revendication 1, caractérisé en ce que l'élément de circuit semi-conducteur (30) du dispositif anti-blocage (26) est en plus monté avec les transistors de puissance de commutation (14, 16 ; 51 à 56) en série avec les bobinages de stator (2, 4 ; 44 à 48).

3. Circuit de commande selon la revendication 1, caractérisé en ce qu'un élément de circuit semi-conducteur (30) du dispositif anti-blocage (26) est monté en série avant chaque bobinage de stator (2, 4 ; 44 à 48), chaque élément de circuit semi-conducteur (30) étant de préférence formé à partir d'un des transistors de puissance de commutation (14, 16; 51 à 56).

4. Circuit de commande selon l'une ou plusieurs des revendications 1 à 3, caractérisé en ce que le/chaque élément de circuit semi-conducteur (30) est relié avec un bon contact thermoconducteur à un capteur de température (32), qui en cas d'une montée en température lorsqu'il atteint une température de puce maximale admissible de l'élément de circuit semi-conducteur (30) opère son blocage.

5. Circuit de commande selon la revendication 4, caractérisé en ce que le/chaque élément semi-conducteur (30) est réalisé sous la forme d'un MOSFET et le capteur de température (32) est réalisé sous la forme d'un commutateur semi-conducteur, en particulier un thyristor, monté entre la grille G et la source S du MOSFET.

6. Circuit de commande selon la revendication 4 ou 5, caractérisé en ce que le/chaque élément semi-conducteur (30) et le capteur de température (32) sont intégrés dans un seul élément, en particulier sous la forme d'un TEMPFET.

7. Circuit de commande selon l'une ou plusieurs des revendications 1 à 6, caractérisé en ce que le/chaque élément de circuit semi-conducteur (30) bloqué en fonction de la température conduit à nouveau seulement après une courte coupure et réenclenchement de la tension d'alimentation.

8. Circuit de commande selon l'une ou plusieurs des revendications 1 à 6, caractérisé en ce que le/chaque élément de circuit semi-conducteur (30) bloqué en fonction de la température conduit à nouveau automatiquement après refroidissement, un circuit parallèle constitué d'une résistance (40) et d'un condensateur (42) étant en outre montés avant le grille G du MOSFET respectivement du TEMPFET.

9. Circuit de commande selon l'une ou plusieurs des revendications 1 à 8, caractérisé en ce que le circuit de limitation de courant (28) présente une résistance de mesure de courant (34) conduisant le courant du moteur et monté en série avec les bobinages de stator (2, 4 ; 44 à 48), dont la chute de tension (Uᵢₛₜ) est alimentée à un palier de commande, ledit palier de commande du courant de moteur étant coupé lorsque la chute de tension (Uᵢₛₜ) devient supérieure ou égale à une tension de référence déterminée (U_{ref}) représentant la valeur maximale de courant.

10. Circuit de commande selon la revendication 9, caractérisé en ce que le palier de commande comporte un transistor de commande (36), dont le parcours base-émetteur est commandé par la chute de tension (Uᵢₛₜ) de la résistance de mesure de courant (34), et dont le parcours collecteur-émetteur commande de préférence le/chaque élément semi-conducteur (30) du dispositif anti-blocage.

11. Circuit de commande selon la revendication 9, caractérisé en ce que le palier de commande comporte un comparateur (64), la chute de tension (Uᵢₛₜ) de la résistance de mesure de courant (34) étant alimentée à une première entrée du comparateur (64), et à la tension de référence (U_{ref}), étant alimentée à une seconde entrée, et une sortie du comparateur (64) commandant de préférence le/chaque élément semi-conducteur (30) du dispositif anti-blocage (26).
